(19) Europäisches Patentamt
European Patent Office
Office européen des brevets

(11) EP 2 803 041 B1

(12) EUROPEAN PATENT SPECIFICATION

(45) Date of publication and mention of the grant of the patent:
**13.03.2019 Bulletin 2019/11**

(21) Application number: **12769115.2**

(22) Date of filing: **08.10.2012**

(51) Int Cl.:
*G06T 15/04* (2011.01)

(86) International application number:
**PCT/EP2012/069862**

(87) International publication number:
**WO 2013/104440 (18.07.2013 Gazette 2013/29)**

(54) **METHOD FOR MULTI-VIEW MESH TEXTURING AND CORRESPONDING DEVICE**

VERFAHREN FÜR EINE MEHRANSICHTSNETZTEXTURIERUNG UND ENTSPRECHENDE VORRICHTUNG

PROCÉDÉ DE TEXTURATION DE MAILLAGE MULTI-VUES ET DISPOSITIF CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2012 EP 12305047**

(43) Date of publication of application:
**19.11.2014 Bulletin 2014/47**

(73) Proprietor: **InterDigital Madison Patent Holdings 75017 Paris (FR)**

(72) Inventors:
 • **ALJ, Youssef**
   F-35576 Cesson Sévigné Cedex (FR)
 • **BOISSON, Guillaume**
   F-35576 Cesson Sévigné Cedex (FR)
 • **MORIN, Luce**
   F-35576 Cesson Sévigné Cedex (FR)
 • **BORDES, Philippe**
   F-35576 Cesson Sévigné Cedex (FR)
 • **PRESSIGOUT, Muriel**
   F-35576 Cesson Sévigné Cedex (FR)

(74) Representative: **Huchet, Anne et al
InterDigital CE Patent Holdings
20, rue Rouget de Lisle
92130 Issy-les-Moulineaux (FR)**

(56) References cited:
 • IIYAMA M ET AL: "Super-Resolution Texture Mapping from Multiple View Images", PATTERN RECOGNITION (ICPR), 2010 20TH INTERNATIONAL CONFERENCE ON, IEEE, PISCATAWAY, NJ, USA, 23 August 2010 (2010-08-23), pages 1820-1823, XP031772151, ISBN: 978-1-4244-7542-1
 • JUNG LEE ET AL: "Polygonal space carving with geometric anti-aliasing", THE VISUAL COMPUTER, vol. 20, no. 4, 1 June 2004 (2004-06-01), pages 229-242, XP055054216, ISSN: 0178-2789, DOI: 10.1007/s00371-003-0229-8
 • ECKERT G ET AL: "Shape refinement for reconstructing 3D-objects using an analysis-synthesis approach", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 3, 7 October 2001 (2001-10-07), pages 903-906, XP010563497, DOI: 10.1109/ICIP.2001.958270 ISBN: 978-0-7803-6725-8
 • KIRIAKOS N KUTULAKOS ET AL: "A Theory of Shape by Space Carving", INTERNATIONAL JOURNAL OF COMPUTER VISION, KLUWER ACADEMIC PUBLISHERS, BO, vol. 38, no. 3, 1 July 2000 (2000-07-01), pages 199-218, XP019216357, ISSN: 1573-1405, DOI: 10.1023/A:1008191222954 cited in the application

- NIEM W: "Automatic reconstruction of 3D objects using a mobile camera", IMAGE AND VISION COMPUTING, ELSEVIER, GUILDFORD, GB, vol. 17, no. 2, 1 February 1999 (1999-02-01), pages 125-134, XP002258790, ISSN: 0262-8856, DOI: 10.1016/S0262-8856(98)00116-4
- SHU-KAM CHOW ET AL: "Removal of Specular Reflection Component Using Multi-view Images and 3D Object Model", 13 January 2009 (2009-01-13), LECTURE NOTES IN COMPUTER SCIENCE; VOL. 5414; PROCEEDINGS OF THE 3RD PACIFIC RIM SYMPOSIUM ON ADVANCES IN IMAGE AND VIDEO TECHNOLOGY, SPRINGER BERLIN HEIDELBERG, BERLIN, HEIDELBERG, PAGE(S) 999 - 1009, XP019137304, ISBN: 978-3-540-92956-7 pages 999-1009, page 999, line 15, paragraph 1. Introduction - page 1000, line 8 page 1002, line 1, paragraph 3 3D Model Reconstruction - last line, paragraph 4 Specularity Removal page 1004, line 1, paragraph 4.2 Specular to Diffuse Transformation - page 1006, last line figure 3
- BASTIAN GOLDLUECKE ET AL: "Superresolution texture maps for multiview reconstruction", COMPUTER VISION, 2009 IEEE 12TH INTERNATIONAL CONFERENCE ON, IEEE, PISCATAWAY, NJ, USA, 29 September 2009 (2009-09-29), pages 1677-1684, XP031672708, ISBN: 978-1-4244-4420-5
- MICHAEL WASCHBÜSCH ET AL: "Scalable 3D video of dynamic scenes", THE VISUAL COMPUTER ; INTERNATIONAL JOURNAL OF COMPUTER GRAPHICS, SPRINGER, BERLIN, DE, vol. 21, no. 8-10, 1 September 2005 (2005-09-01), pages 629-638, XP019339162, ISSN: 1432-8726, DOI: 10.1007/S00371-005-0346-7
- EHSAN AGANJ ET AL: "Spatio-Temporal Shape from Silhouette using Four-Dimensional Delaunay Meshing", COMPUTER VISION, 2007. ICCV 2007. IEEE 11TH INTERNATIONAL CONFERENCE O N, IEEE, PI, 1 October 2007 (2007-10-01), pages 1-8, XP031194505, ISBN: 978-1-4244-1630-1 cited in the application
- LORENSEN W E ET AL: "MARCHING CUBES: A HIGH RESOLUTION 3D SURFACE CONSTRUCTION ALGORITHM", SIAM JOURNAL ON COMPUTING, SOCIETY FOR INDUSTRIAL AND APPLIED MATHEMATICS, US, vol. 21, no. 4, 1 July 1987 (1987-07-01), pages 163-169, XP000576999, ISSN: 0097-5397 cited in the application
- ALJ YOUSSEF, BOISSON GUILLAUME, BORDES PHILIPPE, PRESSIGOUT MURIEL, MORIN LUCE: "Space carving MVD sequences for modeling natural 3D scenes", VISUAL COMMUNICATIONS AND IMAGE PROCESSING; 20-1-2004 - 20-1-2004; SAN JOSE; THREE-DIMENSIONAL IMAGE PROCESSING (3DIP) AND APPLICATIONS II, BURLINGAME, CA, USA, vol. 8920, 24 January 2012 (2012-01-24), pages 1-15, XP008156343, DOI: 10.1117/12.908608 ISBN: 978-1-62841-730-2 [retrieved on 2012-02-09]
- PETER LINDSTROM ET AL: "Image-driven simplification", ACM TRANSACTIONS ON GRAPHICS (TOG), ACM, US, vol. 19, no. 3, 1 July 2000 (2000-07-01), pages 204-241, XP058274950, ISSN: 0730-0301, DOI: 10.1145/353981.353995

**Description**

**1. Scope of the invention**

The invention relates to the domain of image or video processing and more particularly in the processing of data representative of texture associated to images of a multi-views video stream. The invention also relates to the domain of modelling the texture of real scene by using texture data and depth data associated to images representative of the scene according to several points of view.

**2. Prior art**

Combined with the use of stereoscopic displays, Multi-View Imaging (MVI) provides a realistic depth perception to the user and allows a virtual navigation around the scene. It also offers the possibility to synthesize virtual views, opening therefore a broad spectrum of applications such as 3DTV and Free-viewpoint TV (FTV). An end-to-end MVI chain presents many challenges due to the inherent problems related to scene capture, data representation and transmission. Indeed, during scene acquisition, multiple cameras are used; hence several photometric errors may occur due to the changing illumination across different views, which increase the signal ambiguity during depth estimation. Scene representation is also a challenging task. One should strive to build a dense yet non-redundant scene model from the set of overlapping views, each view comprising information related to the texture and to the depth. The compromise between model simplicity and easy rendering is usually hard to satisfy. The representation is then to be transmitted through a communication channel. Determining the proper rate-distortion trade-off is another key point. At decoder side, high fidelity to original views is required. Finally to assess the quality of virtual views, conventional image based objective metrics such as Peak of Signal to Noise Ratio (PSNR) or Structural Similarity (SSIM) are not applicable since the reference images for such views are not available.

The paper "Super-Resolution Texture Mapping from Multiple View Images" by Liyama et al., published on August 23, 2010, discusses an artifact-free super-resolution texture mapping from multiple-view images.

The paper "Polygonal space carving with geometric anti-aliasing" by Jung Lee et al., published on June 2004 in The Visual Computer, discusses an algorithm that solves the shape recovery problem from N arbitrary images by introducing a polygonal carving technique.

The paper "Shape refinement for reconstructing 3D-objects using an analysis-synthesis approach" by Eckert et al., published on July 1st, 2000, discusses a shape refinement method for reconstructing the shape of a rigid 3D-object using multiple calibrated camera images.

**3. Summary of the invention**

The purpose of the invention is to overcome at least one of these disadvantages of the prior art.

More particularly, the invention has the notable purpose of reducing the amount of texture information associated to multi-views data representative of a scene.

The scope of the invention is defined by the appended claims. The embodiments and/or examples of the following description which are not covered by the appended claims are to be considered as not being part of the present invention.

**4. List of figures**

The invention will be better understood, and other specific features and advantages will emerge upon reading the following description, the description making reference to the annexed drawings wherein:

- figure 1 illustrates a meshed surface 1 representative of a scene viewed and captured according to several points of views, according to a particular embodiment of the invention;
- figure 2 illustrates the association of a first texture information with a mesh element of the surface 1 of figure 1 and the projection of the first texture information on at least a part of the views, according to a particular embodiment of the invention;
- figures 3 illustrates a mesh element of the meshed surface 1 of figure 1 entirely visible according to at least one of the points of view, according to a particular embodiment of the invention;
- figure 4 illustrates a mesh element of the meshed surface of figure 1 partially visible according to at least one of the points of view, according to a particular embodiment of the invention;
- figure 5 illustrates a device implementing a method for texturing a mesh of surface 1 of figure 1, according to a particular implementation of the invention;

- figure 6 illustrates a method for texturing a mesh of a surface 1 of figure 1, according to a particular implementation of the invention.

## 5. Detailed description of embodiments of the invention

The invention will be described in reference to a particular embodiment of a method for texturing a mesh of surface, which is representative of the scene. The scene has been acquired from several points of view, an image or view of the scene being associated with a point of view. A mesh is associated with the surface, the mesh comprising a plurality of mesh elements (for example triangles or quadrilaterals). Each image of the scene comprises a plurality of pixels, the number of pixels depending on the resolution of the image of the scene associated with the view. A texture information is associated with each image of the scene, the texture information corresponding for example to a video information (for example RGB data representative of the grey level associated with each colour (RGB) information) associated with the pixels of the image corresponding to a view of the scene. For a mesh element which is at least partially visible from two or more views or, equivalently, in two or more images (called first images in the following description), a first texture information extracted from one of the first images is associated to the mesh element and projected on all or part of the first image, i.e. on the image where the mesh element is at least partially visible. The projected first texture information is compared with each texture information associated to the first images on which the first texture information has been projected. From the comparison results, an error information is estimated which is for example representative of the difference between the projected first texture information and the texture information associated with the first images on which the first texture information has been projected. The step of associating a first texture information with the mesh element is reproduced for another first image and the steps of projecting and comparing this new first texture information are reproduced. These steps are advantageously reiterated for each first image, forming a set of several candidate first texture information. When an error information has been estimated for all (candidate) first texture information, one of them is selected according to the error information assigned with each of them. The selection of one single texture information (to be assigned with a mesh element) among the plurality of texture information associated with the plurality of views for which the mesh element is at least partially visible enables to reduce the amount of data to be transmitted to a display or any receiver over a network. According to the invention, minimal input data needed to associate a texture with a mesh element is a meshed surface representative of a scene and texture information associated with a plurality of images representing the scenes according to different points of view. It also enables to select the best texture information candidate to map a given mesh element, reducing photometric errors, which occur for example when the texture information associated with a mesh element correspond to the average of all texture information available in the different views where the mesh element is visible or partially visible.

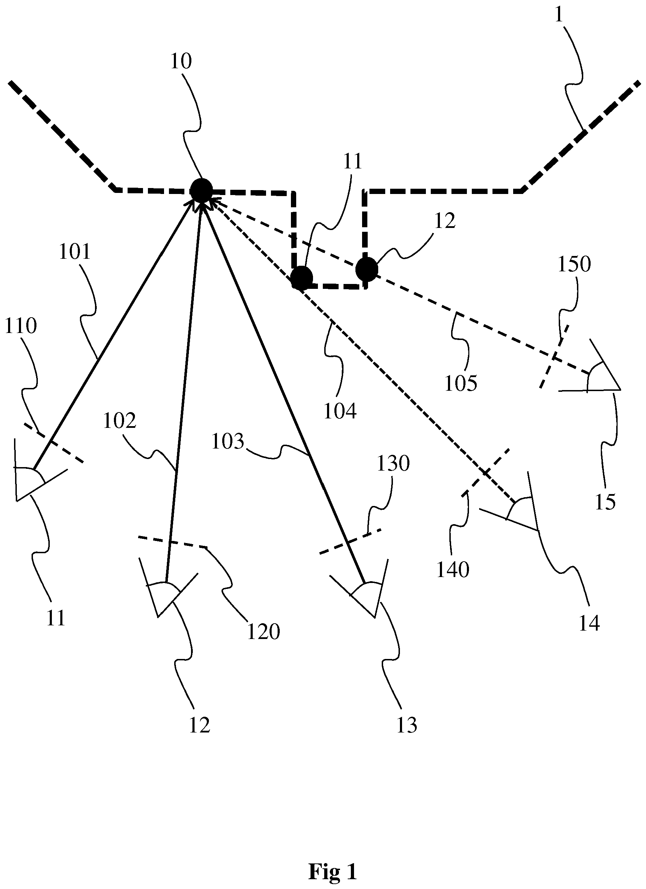

**Figure 1** illustrates a surface 1 representative of a scene viewed and captured according to several points of views. The surface 1 is representative of a scene acquired according to a plurality of points of view 11, 12, 13, 14, 15. An image 110, 120, 130, 140, 150 is associated with each point of view 11 to 15, corresponding to a representation of the scene according to a given point of view. A mesh is associated with the surface 1, the mesh comprising a plurality of mesh elements (for example thousands of mesh elements), for example triangles or quadrilaterals. The surface 1 corresponds advantageously to a 3D representation of the scene.

The surface 1 and the associated mesh are obtained by combining methods well-known by the skilled person in the art, for example by combining the "shape from silhouette" method with the marching-cubes algorithm or by combining the space carving method with the marching-cubes algorithm. The "shape from silhouette" method (described for example in "Spatio-Temporal Shape from Silhouette using Four-Dimensional Delaunay Meshing" by Ehsan Aganj, Jean-Philippe Pons, Florent Ségonne and Renaud Keriven) and the space carving method (described in "A Theory of Shape by Space Carving" published in International Journal of Computer Vision, 38(3), 199-219 (2000), by Kiriakos N. Kutulakos and Steven M. Seitz) are used for obtaining a 3D representation of a scene from a plurality of views of the scene. The marching cubes algorithm (published in the 1987 SIGGRAPH proceedings by Lorensen and Cline) is then applied to the 3D representation of the scene as to obtain a meshed surface as a 3D representation of the scene. French Patent application FR1161788, filed on December 16, 2011, describes a method for obtaining a meshed surface corresponding to a 3D representation of a scene. FR1161788 recites a 3D modeling system designed for Multi-view Video plus Depth (MVD) sequences. The aim is to remove redundancy in depth information present in the MVD data. To this end, a volumetric framework is employed in order to merge the input depth maps. Hereby a variant of the space carving algorithm is proposed: voxels are iteratively carved by ray-casting from each view, until the 3D model be geometrically consistent with every input depth map. A surface mesh is then extracted from this volumetric representation thanks to the marching cubes algorithm.

At least one of the mesh elements is visible or partially visible in different images associated to the views of the scene. According to the non limitative example of figure 1, the mesh element 10 is entirely visible from the points of view 11, 12, 13, i.e. the mesh element 10 is entirely visible in the first images 110, 120, 130 associated with the points of view 11, 12, 13. The mesh element 10 is partially visible from the point of view 14, i.e. the mesh element 10 is partially visible in the first image 140. Indeed, as illustrated on Figure 1, the viewing direction 104 having as origin the point of view 14 and as extremity the mesh element 10 is tangent to a point 11 (or mesh element 11) of the surface 1 on the path separating the point of view 14 and the mesh element 10. The mesh element is not visible from the point of view 15 and is not visible on the associated image 150. The image 150 is thus not considered as being a first image. Indeed, as illustrated on Figure 1, the viewing direction 105 having as origin the point of view 15 and as extremity the mesh element 10 has an intersection with the surface 1, the intersection corresponding to the point or mesh element 12 of surface 1, the intersection 12 being positioned between the point of view 15 and the mesh element 10 on the path corresponding to the viewing direction 105. For each image 110 to 150, a visibility label is advantageously associated with the mesh element 10. The visibility label takes for example two values, i.e. visible and non visible, or three value, i.e. entirely visible, partially visible and non visible.

According to a non limitative embodiment, the visibility information associated to the mesh element 10 is determined by comparing a depth information associated with the mesh element 10 and a depth information associated to pixels of a first image 110 to 150 on which the mesh element 10 is projected. The mesh element visibility with respect to each image 110 to 150 is determined for example using OpenGL z-buffer. In a first pass, the mesh (i.e. all mesh elements) is projected onto a current image (for example the image 110), and the z-buffer is extracted, the z-buffer comprising a depth information associated to each mesh element as seen in the current image (for example, a depth information is associated with each pixel of the current image). Depth information is determined by projecting mesh elements into an image, i.e. by converting the coordinates of the mesh element from world space into the image space. A second pass is dedicated to visibility determination using the computed z-buffer. Each vertex of the mesh element 10 is projected onto the current image 110 and the depth component, denoted as $z_{projected}$, is checked against the pixel depth z-buffer of the current image 110. If the projected vertex is behind the pixel in the z-buffer (i.e. the value $z_{projected}$ is greater than the depth value associated to the pixel in the z-buffer of the current image), then this vertex is hidden, and thus the set of mesh triangles lying on this vertex are not visible. In contrast, if the projected vertex is ahead the pixel in the z-buffer (i.e. the value $z_{projected}$ is less than the depth value associated to the pixel in the z-buffer of the current image), then this vertex is visible, and thus the set of mesh triangles lying on this vertex are at least partially visible. The visibility information associated with the mesh element is for example determined according to the following algorithm:

```
// Views traversal
for each view Vⱼ do
        Initialize all mesh elements to visible.
        Project M onto Vⱼ .
        Read z_buffer.
        // Mesh vertices traversal
        for each vertex v do
                Determine (q, l, z_projected) the projection of the vertex v(X, Y,Z) onto
                Vⱼ .
                if z_buffer[q,l] > z_projected then
                        v is a hidden vertex. Mark all the triangles lying on v as hidden.
                end
        end
end
```

According to a variant, the mesh is not projected into the current image as to determine the z-buffer associated with the current image. The depth of the mesh element is compared to a depth information comprised in a depth map associated with the current image, the depth map being received with the image (for example in a stream of the type MVD).

According to a variant, the visibility information associated with the mesh element 10 (and with each mesh element of the surface 1) is received with the data representatives of the images 110 to 150 and is not to be determined. These data comprises for example RGB information for each pixel and visibility information associated with the mesh elements of the mesh of figure 1 and comprising information about the visibility of mesh elements in each and every images representing the scene (the visibility information being for example stored in a visibility map).

Images 110 to 150 belong to a multi-view video stream comprising a sequence of several images representative of a same scene. According to a non-limitative example, the multi-view video stream is MVD type (Multi-view Video plus Depth). In case of MVD data, depth information is associated with each image representing the scene. A depth information is thus associated with each image 110 to 150, the depth information correspond to data representative of depth, for example a depth map (for example of the type of z-buffer) or a disparity map. A depth information is a generic name and corresponds to any data structure representative of a depth or of a disparity. The depth information associated with the pixels of the images 110 to 150 are for example captured with the use of appropriate sensors, for example by using infrared sensors associated with an infrared emitter (for example system of the type Kinect®) or by using a system comprising a laser emitter and an associated sensor configured for determining the crossing time of a laser ray emitted toward the captured scene and reflected by the scene, the determined time being representative of the path crossed and thus of the depth associated with the point of the scene having reflected the laser ray. According to a variant, video information (corresponding for example to colour information) and depth information associated with the pixels of images 110 to 150 are stored in memories under the form of RGB$\alpha$ (Red, Green, Blue, $\alpha$ channels) information, channels RGB being used for storing video information associated with each pixel (for example 8, 10 or 12 bits per channel) and the $\alpha$ channel being used for storing the depth information (or disparity information), for example on 8, 10 or 12 bits.

Advantageously, intrinsic and extrinsic parameters of acquisition devices used for acquiring the images 110 to 150 are known and for example stored in a memory. Intrinsic parameters comprise for example focal length, enlargement factor of the image, coordinates of the projection of the optical centre of the acquisition device on image plane and/or a parameter representative of potential non-orthogonality of lines and columns of photosensitive cells forming the acquisition device. Extrinsic parameters comprise for example the orientation matrix for passing from world space to image space (and inversely) and/or components of translation vector for passing from world space to image space (and inversely).

Naturally, the number of images is not limited to 5 images but extends to any number greater than 2, for example 2, 3, 4, 5, 10, 20, 50, 100 images, data representative of depth being associated with each image. In a same way, the number of first images is not limited to 4 but extends to any number greater than 2. Advantageously, each image is acquired by a particular acquisition device according to a particular point of view, acquisition devices being spatially staggered. According to a variant, only a pair of left and right images is acquired by means of two acquisition devices, the other images of the plurality of images representative of the acquired scene being estimated from the left and right images by disparity compensated interpolation. According to this variant, each image is also representative of the same scene according to a particular point of view and depth information is associated with each image, independently of the fact that the image be acquired or interpolated.

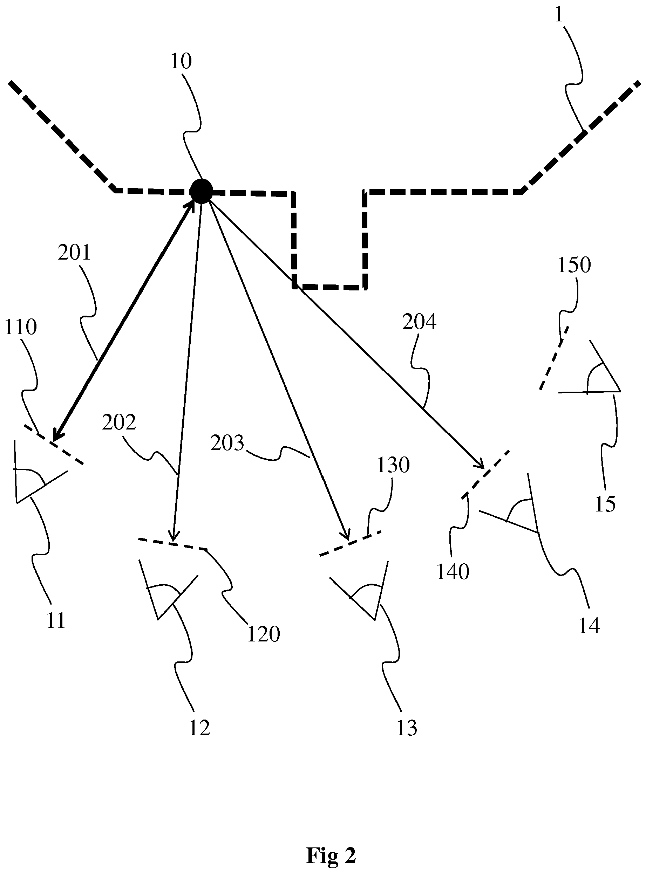

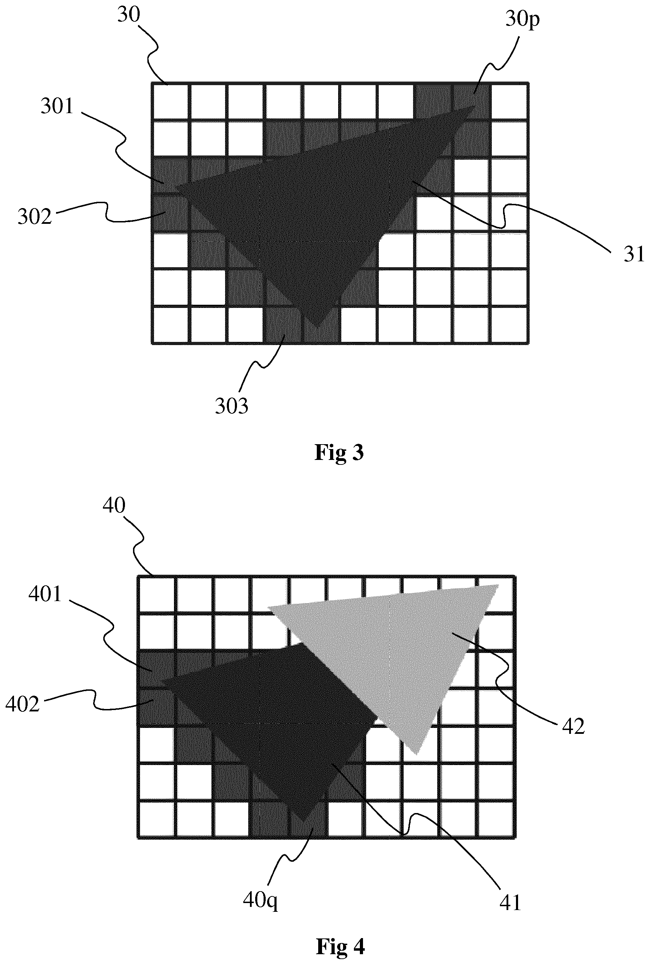

**Figure 2** illustrates the association of a first texture information with a mesh element of the surface 1 and the projection of a first texture information on some views, according to a particular and non limitative embodiment of the invention. The mesh element 10 is visible or partially visible from the points of view 11, 12, 13 and 14, i.e. the mesh element 10 is visible or partially visible in the images 110, 120, 130 and 140 respectively associated with the points of view 11, 12, 13 and 14. The images 110 to 140 in which the mesh element is partially visible are called first images. One first image 110 is selected among the plurality of first images 110 to 140 and a first texture information extracted from thus first image 110 is extracted and associated with the mesh elements. The first texture information corresponds advantageously to the video information (or RGB colour information) associated with the pixels of the first image 110 corresponding to the projection of the mesh element 10 onto the first image 110. The pixels of the first image on which is projected the mesh element 10 are illustrated on Figure 3. According to a variant, the texture information associated with the images corresponds to YUV data.

**Figure 3** illustrates the projection 31 of the mesh element 10 onto an image 30 (corresponding for example to the image 110) on which the mesh element is entirely visible. The first texture information associated with the mesh element 10 corresponds to the video information associated with the pixels on which the mesh element 10 is projected, these pixels being "covered" or partially "covered" by the projection 31 of the mesh elements. These pixels 301 to 30i are illustrated in grey on Figure 3.

As illustrated on Figure 2 by the double arrow 201, the mesh element 10 is first textured with a first texture information of image 110. This first texture information is then projected onto all first images 110 to 140, which is illustrated by the arrows 201, 202, 203 and 204. The projection of the mesh element 10 (textured with the first texture information of corresponding pixels of first image 110) onto first images 110, 120, 130 for which the mesh element 10 is entirely visible is illustrated by Figure 3 and the projection of the mesh element 10 (textured with the first texture information of corresponding pixels of first image 110) onto the first image 140 for which the mesh element 10 is only partially visible is illustrated by Figure 4. The projection of the mesh element 10 onto one first image 110 to 140 corresponds to a conversion of the coordinates of the mesh element 10 from the world space into the image space associated to the first image onto which the mesh element is projected.

On **Figure 3**, the image 30 corresponds to a first image (first images 110, 120 or 130) on which the mesh element 10 is projected. The projection of the mesh element 10 corresponds to the mesh element referenced 31. Pixels in gray 301 to 30p represents the p pixels (p being an integer) of the projection image covered at least partially by the projection 31 of the mesh element 10. On **Figure 4**, the image 40 corresponds to the first image 140 of Figure 2 on which the mesh element is only partially visible, a part of the mesh element 10 being hidden by another mesh element 11 illustrated on Figure 1. The projection of the mesh element 10 on image 40 is referenced 41 and the projection of the mesh element 11 on image 40 is referenced 42. According to this example, the number q (q being an integer) of pixels 401 to 40q of image 40 at least partially covered by the projection 41 of the mesh element 10 are less than the number p of the pixels of image 30 (p > q) (with a same resolution for all first images 110 to 140).

After the projection of the first texture information of first image 110 associated with the mesh element 10 on the first images 110 to 140, the first texture information is compared with the texture information associated with the pixels of each first image 110 to 140 corresponding to the projection of the mesh elements. The pixels of a first image 110 to 140 corresponding to the projection of the mesh element 10 also correspond to the pixels of this first image for which the mesh element is visible according to the point of view associated with this image. The result of the comparison advantageously corresponds to the distortion between the projected first texture information and the texture information of the pixels of the image onto which the mesh element is projected, and is:

$$D_{i,j} = \left\| M_{I_i \rightarrow V_j} - I_j \right\|^2 \qquad \text{equation 1}$$

Where:

$M_{I_i \rightarrow V_j}$ corresponds to the projection onto the image $V_j$ (for example one of the image 120, 130 or 140) of the mesh element 10 textured with the first texture information of image $I_i$ (for example first image 110)

$D_{i,j}$ corresponds to the distortion between the texture information of images i and j.

The first texture information of image 110 associated with the mesh element 10 is compared with each texture information of each first image 110 to 140. According to a variant, the first texture information is compared with each texture information of each first image except with the first image 110, the distortion between the projected first texture information (of first image 110) and the texture information of image 110 being equal to 0 or close to 0.

The same process is repeated by associating a first texture information extracted from the first image 120 with the mesh element 10, by projecting this new first texture information onto the first images 110 to 140 and by comparing it with the texture information associated with the pixels corresponding to the projection of the mesh element 10 onto the first images 110 to 140 as to determine the distortion between the projected first texture information and each first image. This process is reiterated by associating first texture information extracted from each first image 130 and 140 as to determine the distortion between each projected first texture information and each first image. According to a variant, the distortion is determined between each first texture information (from each first image 110 to 140) with only a part of the first images (by excepting the first image providing the first texture information to be projected onto the first images for comparison). A non limitative example of an algorithm used for determining the result of comparison between the first texture information and the first images is as follow:

```
// Textures traversal
for each texture Iᵢ do
        // Views traversal
        for each view Vⱼ do
                Compute M_{I_i→V_j}: projection of the mesh textured with texture Iᵢ onto
                view Vⱼ .
                D_{i,j} = ‖M_{I_i→V_j} − I_j‖²
        end
end
```

For each first texture information associated with the mesh element 10 (extracted from each first image 110 to 140), an error is determined and associated with respectively each first texture information. The determination of the error associated with a first texture information us based on the comparison results between the projected first texture information and the texture information associated with the pixels of the first images onto which the textured mesh element is projected. The calculation of an error information associated with the mesh element (T) 10 textured with a first texture information originating from a first image $I_i$ (i corresponding to a first image, i being equal to 4 according to the non limitative example of Figures 1 and 2) is performed for example by using the following equation:

$$Error_{T,I_i} = \sum\nolimits_{\substack{j=1 \\ T\ visible\ in\ V_j}}^{n} \left( \Sigma_{(q,l)\epsilon\ M_{T,V_j}} D_{i,j}[u,v] \right) \qquad \text{equation 2}$$

u, v corresponding to the coordinates of pixel in an image I having a resolution of q x l pixels.

One first texture information is then selected among the plurality of first texture information according to the errors associated with each first texture information. The selected first texture information corresponds advantageously to the first texture information having the least error value. A first texture information is for example selected according to the following equation:

$$\widehat{I_T} = Error_{T,I_i}\ (I_i\epsilon\mathcal{F})$$

$\mathcal{F}$ corresponding to the set of first texture information (available in the first images 110 to 140).

A non limitative example of an algorithm used for selecting the first texture information which minimizes the error is as follow:

```
// Triangles traversal
for each triangle T do
        // Views traversal
        for each view Vj do
            Determine MIi→Vj the projection of the triangle T onto Vj where T is
            visible.
        end
        // Textures traversal
        for each texture Ii do
            Compute ErrorT,Ii .
        end
            Determine ÎT.
end
```

The selection of a first texture information among the set of candidate first texture information enables to assign one single texture information to a mesh element for every image in which the mesh element is partially visible, which reduces the amount of data to be coded and transmitted to any display device displaying the images or to any device decoding the data representative of the images to be displayed. The selection of the first texture information minimizing photometric error also enables to reduce artefacts which could appear if the texture associated to a mesh element would correspond to an arbitrary selection of one candidate texture information or to a mix of the candidate texture information.

Advantageously, a first texture information is assigned to each mesh element of the mesh or to a part of the mesh elements of the mesh.

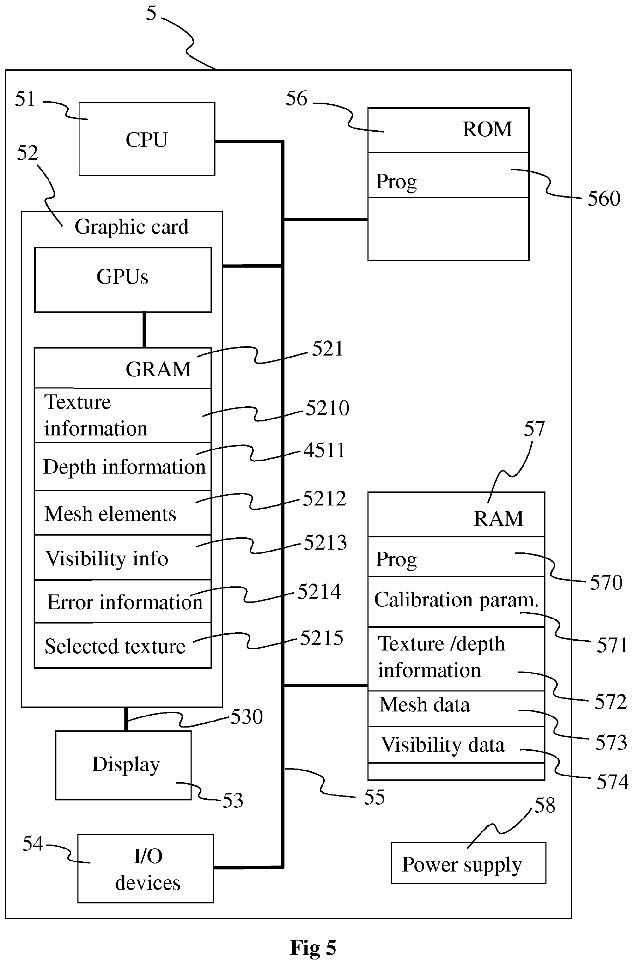

**Figure 5** diagrammatically shows a hardware embodiment of a device 5 adapted and configured for texturing a mesh of a surface 1 and for the generation of display signals of one or several images, according to a particular and non limitative embodiment of the invention. The device 5 corresponds for example to a personal computer PC, a laptop, a tablet or a mobile phone.

The device 5 comprises the following elements, connected to each other by a bus 55 of addresses and data that also transports a clock signal:

- a microprocessor 51 (or CPU),
- a graphics card 52 comprising:

  • several Graphical Processor Units (or GPUs) 520,
  • a Graphical Random Access Memory (GRAM) 521,

- a non-volatile memory of ROM (Read Only Memory) type 56,
- a Random Access Memory or RAM 57,
- one or several I/O (Input/Output) devices 54 such as for example a keyboard, a mouse, a webcam, and
- a power source 58.

The device 5 also comprises a display device 53 of display screen type directly connected to the graphics card 52 to display notably the displaying of synthesized images calculated and composed in the graphics card, for example live. The use of a dedicated bus to connect the display device 53 to the graphics card 52 offers the advantage of having much greater data transmission bitrates and thus reducing the latency time for the displaying of images composed by the graphics card. According to a variant, a display device is external to the device 5 and is connected to the device 5 by a cable transmitting the display signals. The device 5, for example the graphics card 52, comprises a means for transmission or connection (not shown in figure 5) adapted to transmit a display signal to an external display means such as for example an LCD or plasma screen or a video-projector.

It is noted that the word "register" used in the description of memories 52, 56 and 57 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 51 loads and executes the instructions of the program contained in the RAM 57.

The random access memory 57 notably comprises:

- in a register 530, the operating program of the microprocessor 51 responsible for switching on the device 5,
- calibration parameters 571 representative of intrinsic and extrinsic parameters of the acquisition devices used for acquiring the images 110 to 150 representative of the scene to be modelled;
- data 572 representative of the texture associated with the images 110 to 150, for example RGB information associated with the pixels of the images 110 to 150;
- data 573 representative of the mesh (for example the coordinates of the vertex of the mesh elements of the mesh) of a surface representative of the scene represented in the images 110 to 150;
- data 574 representative of the visibility of the mesh elements in the image 110 to 150 (for example a label visible and a label non visible associated with the pixels of the image and with the mesh elements of the mesh) when these data are available.

The algorithms implementing the steps of the method specific to the invention and described hereafter are stored in the memory GRAM 57 of the graphics card 52 associated with the device 5 implementing these steps. When switched on and once the parameters 570 representative of the environment are loaded into the RAM 57, the graphic processors 520 of the graphics card 52 load these parameters into the GRAM 521 and execute the instructions of these algorithms in the form of microprograms of "shader" type using HLSL (High Level Shader Language) language or GLSL (OpenGL Shading Language) for example.

The random access memory GRAM 521 notably comprises:

- in a register 5210, the data representative of the texture associated with the images 110 to 150,
- data 5211 representative of a depth information (which is estimated or received with the texture information) associated with the pixels of the images 110 to 150,
- data 5212 representative of the mesh elements (for example coordinates of the vexels),
- parameters 5213 representative of the visibility information associated with the mesh elements of the mesh, and
- data 5214 representative of an error information associated with the candidate first texture information to be assigned to a given mesh element,
- parameter 5215 representative of the selected first texture information among the plurality of candidate first texture information.

According to a variant, a part of the RAM 57 is assigned by the CPU 51 for storage of the values 5211 to 5214 and the parameters 5215 if the memory storage space available in GRAM 521 is insufficient. This variant however causes greater latency time in the composition of an image comprising a representation of the environment 1 composed from microprograms contained in the GPUs as the data must be transmitted from the graphics card to the random access memory 57 passing by the bus 55 for which the transmission capacities are generally inferior to those available in the graphics card for transmission of data from the GPUs to the GRAM and vice-versa.

According to another variant, the power supply 58 is external to the device 5.

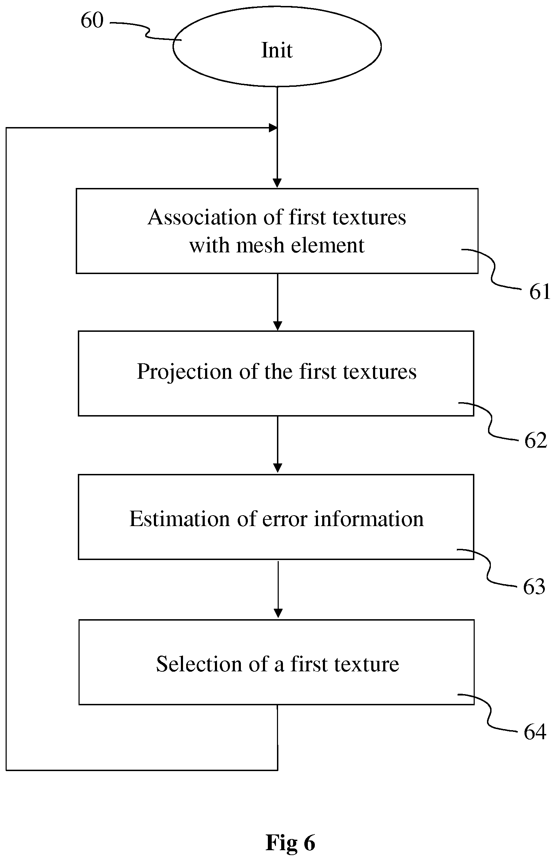

**Figure 6** illustrates a method for texturing a mesh of a surface 1 implemented for example in a computation unit illustrated on Figure 5, according to a particular and non limitative embodiment of the invention.

During an initialisation step 60, the different parameters of the device 5 are updated. In particular, the parameters representative of the images and associated depth maps are initialised in any way.

Then, during a step 61, for each first image of a set of first images, a first texture information is associated with the mesh element. A first image corresponds to an image of a plurality of images representing a scene according to several points of view, in which image a given mesh element is visible or at least partially visible. The visibility of the mesh element is determined by projecting it in the first images and comparing the depth of the mesh element (determined by converting the coordinates of the mesh element from the world space to the image space) with the depth information associated with the pixels of the images onto which the mesh element is projected. According to a variant, the visibility information associated with the mesh element and each image is received in addition to the data representative of the images (texture information, for example RGB information associated with the pixels of the images). As the mesh element is visible in at least two first images, there is several first texture information (called candidate first texture information) which is associated with the mesh element.

Then, during a step 62, the candidate first texture information is each projected onto the first images. According to a variant, the candidate first texture information are each projected onto only a part of the first images, for example on all first images excepted the first image providing the candidate first texture information which is projected on the first images. A projection of a mesh element onto a first image corresponds to a conversion of the coordinates of a mesh element from the world space to the image space of the first image.

Then, during a step 63, en error information is estimated for each candidate first texture information. The error information is computed according to the results of a comparison between the projected first texture information and the texture information associated with the first image on which is projected the candidate first texture information. The comparison is performed for each first image onto which the candidate first texture information is projected. According to a non limitative example, the error information associated with a candidate first texture information corresponds to the sum of all comparison results between the candidate first texture information and the texture information associated with the first images onto which the candidate first texture information is projected. According to a variant, the error information associated with a candidate first texture information corresponds to the average of all comparison results between the candidate first texture information and the texture information associated with the first images onto which the candidate first texture information is projected

Lastly, during a step 64, one of the candidate first texture information is selected among the plurality of candidate first texture information according to the error information estimated for and associated with each candidate first texture information. Advantageously, the selected first texture information corresponds to the candidate first texture information having the least value of error information.

Naturally, the invention is not limited to the embodiments previously described.

In particular, the invention is not restricted to a method for texturing a mesh but extends to the computation unit implementing such a method and to the display device or mobile device comprising a computation unit implementing the texturing of a mesh or the display of the images resulting from the texturing process. The invention also concerns a method for selecting a texture information to be assigned to a mesh element among a plurality of candidate texture information and also to a method for coding and transmitting the selected texture information associated with a mesh of a 2D or 3D representation of a scene in a multi-view system.

The implementation of calculations necessary to the texturing of the mesh and to the selection of a texture information to be assigned to a mesh element is not limited either to an implementation in shader type microprograms but also extends to an implementation in any program type, for example programs that can be executed by a CPU type microprocessor.

The use of the invention is not limited to a live utilisation but also extends to any other utilisation, for example for processing known as postproduction processing in a recording studio for the display of synthesis images for example. The implementation of the invention in postproduction offers the advantage of providing an excellent visual display in terms of realism notably while reducing the required calculation time.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. Method implemented on a computation device (5) for texturing a mesh, the mesh being associated with a surface (1) representative of a scene captured according to a plurality of points of view (11 to 15), an image (110 to 150) of the scene being associated with each point of view (11 to 15), wherein at least a mesh element (10) of said mesh is at least partially visible from at least two first images (110 to 140) of the plurality of images (110 to 150), comprising:

   a) selecting a first image among said at least two first images (110 to 140);
   b) projecting said mesh element (10) onto said selected first image and texturing said mesh element (10) with a first texture information obtained from pixels of said selected first image, said pixels corresponding to the projection of said mesh element (10) onto said selected first image;
   c) for each first image of said at least two first images (110 to 140), comparing the first texture information of said textured mesh element with the texture information associated with the pixels of said each first image that correspond to the projection of said textured mesh element onto said each first image;
   d) determining an error information for said first texture information according to a result of said comparing;

   the method being **characterized in that** it further comprises:

   e) selecting a first image among said at least two first images (110 to 140) different from the first image selected at operation a) and reiterating operations b) to e) until each first image has been selected; and
   f) selecting the first texture information minimizing the error information among the plurality of first texture information.

2. Method according to claim 1, wherein the error information associated with a first texture information corresponds to a sum of the comparison results.

3. Method according to one of claims 1 to 2, further comprising:

   - projecting said mesh element (10) in at least a part of said images of the scene (110 to 150),
   - for each image of the at least a part of images (110 to 150), comparing a depth information associated with the projected mesh element and a depth information associated with the image,
   - for each image of said at least a part of images (110 to 150), determining a visibility information associated te with said mesh element (10) according to the result of said comparing, a mesh element being labeled as at least partially visible or not visible in said image according to said visibility information.

**4.** Method according to claim 3, wherein said projection of said mesh element (10) corresponds to a conversion of the coordinates of the mesh element (10) from world space into the image space of the image.

**5.** Method according to one of claims 1 to 4, wherein each image comprises a plurality of pixels, video information being associated with the plurality of pixels.

**6.** Method according to one of claims 1 to 5, wherein each image is represented by using Multi-view Video plus Depth (MVD) representation.

**7.** A device (5) configured to texture a mesh, the mesh being associated with a surface (1) representative of a scene captured according to a plurality of points of view (11 to 15), an image (110 to 150) of the scene being associated with each point of view (11 to 15), wherein at least a mesh element (10) of said mesh is at least partially visible from at least two first images (110 to 140) of the plurality of images (110 to 150), the device (5) comprising a processor (51) configured to:

> a) select a first image among said at least two first images (110 to 140);
> b) project said mesh element (10) onto said selected first image and texturing said mesh element (10) with a first texture information obtained from pixels of said selected first image, said pixels corresponding to the projection of said mesh element (10) onto said selected first image;
> c) for each first image of said at least two first images (110 to 140), compare the first texture information of said textured mesh element with the texture information associated with the pixels of said each first image that correspond to the projection of said textured mesh element onto said each first image;
> d) determine an error information for said first texture information according to a result of said comparing;

the device being **characterized in that** the processor (51) is further configured to:

> e) select a first image among said at least two first images (110 to 140) different from the first image selected at step a) and reiterate operations b) to e) until each first image has been selected; and
> f) select the first texture information minimizing the error information among the plurality of first texture information.

**8.** The device according to claim 7, wherein the error information associated to a first texture information corresponds to a sum of the comparison results.

**9.** The device according to one of claims 7 to 8, wherein said processor is further configured to:

> - project said mesh element (10) in at least a part of said images (110 to 150) of the scene,
> - compare, for each image of the at least a part of images, a depth information associated with the projected mesh element and a depth information associated with the image,
> - determine, for each image at said least a part of said images (110 to 150), a visibility information associated with said mesh element (10) according to the result of the comparison, a mesh element being labeled as at least partially visible or not visible in said image according to said visibility information.

**10.** The device according to claim 9, wherein said processor is further configured to convert the coordinates of the mesh element (10) from world space into the image space of the image.

**11.** The device according to one of claims 7 to 10, wherein each image comprises a plurality of pixels, video information being associated with the plurality of pixels.

**12.** The device according to one of claims 7 to 11, wherein each image is represented by using Multi-view Video plus Depth (MVD) representation.

**Patentansprüche**

**1.** Verfahren, das in einer Computervorrichtung (5) implementiert wird, zum Texturieren eines Maschennetzes, wobei das Maschennetz mit einer Oberfläche (1) verknüpft ist, die eine in Übereinstimmung mit mehreren Standpunkten (11 bis 15) erfasste Szene darstellt, wobei mit jedem Standpunkt (11 bis 15) ein Bild (110 bis 150) der Szene verknüpft ist, wobei mindestens ein Maschennetzelement (10) des Maschennetzes von mindestens zwei ersten Bildern (110 bis 140) der mehreren Bilder (110 bis 150) mindestens teilweise sichtbar ist, wobei das Verfahren umfasst:

a) Auswählen eines ersten Bilds unter den mindestens zwei ersten Bildern (110 bis 140);

b) Projizieren des Maschennetzelements (10) auf das ausgewählte erste Bild und Texturieren des Maschennetzelements (10) mit ersten Texturinformationen, die aus Pixeln des ausgewählten ersten Bilds erhalten werden, wobei die Pixel der Projektion des Maschennetzelements (10) auf das ausgewählte erste Bild entsprechen;

c) Vergleichen der ersten Texturinformationen des texturierten Maschennetzelements mit den Texturinformationen, die mit den Pixeln des jeden ersten Bilds verknüpft sind, das der Projektion des texturierten Maschennetzelements auf das jede erste Bild entspricht, für jedes erste Bild der mindestens zwei ersten Bilder (110 bis 140);

d) Bestimmen von Fehlerinformationen für die ersten Texturinformationen in Übereinstimmung mit einem Ergebnis des Vergleichs;

wobei das Verfahren **dadurch gekennzeichnet ist, dass** es ferner umfasst:

e) Auswählen eines ersten Bilds unter den mindestens zwei ersten Bildern (110 bis 140), das vom dem in der Operation a) ausgewählten ersten Bild verschieden ist, und Wiederholen der Operationen b) bis e), bis jedes erste Bild ausgewählt worden ist; und

f) Auswählen derjenigen ersten Texturinformationen, die die Fehlerinformationen minimieren, unter den mehreren ersten Texturinformationen.

2. Verfahren nach Anspruch 1, wobei die Fehlerinformationen, die mit ersten Texturinformationen verknüpft sind, einer Summe der Vergleichsergebnisse entsprechen.

3. Verfahren nach einem der Ansprüche 1 bis 2, das ferner umfasst:

- Projizieren des Maschennetzelements (10) in mindestens einem Teil der Bilder der Szene (110 bis 150),

- Vergleichen von Tiefeninformationen, die mit dem projizierten Maschennetzelement verknüpft sind, und von Tiefeninformationen, die mit dem Bild verknüpft sind, für jedes Bild des mindestens einen Teils der Bilder (110 bis 150),

- Bestimmen von Sichtbarkeitsinformationen, die mit dem Maschennetzelement (10) verknüpft sind, in Übereinstimmung mit dem Ergebnis des Vergleichs, für jedes Bild des mindestens einen Teils der Bilder (110 bis 150), wobei ein Maschennetzelement in Übereinstimmung mit den Sichtbarkeitsinformationen als in dem Bild mindestens teilweise sichtbar oder nicht sichtbar bezeichnet wird.

4. Verfahren nach Anspruch 3, wobei die Projektion des Maschennetzelements (10) einer Umwandlung der Koordinaten des Maschennetzelements (10) aus dem Welt-Raum in den Bild-Raum des Bilds entspricht.

5. Verfahren nach einem der Ansprüche 1 bis 4, wobei jedes Bild mehrere Pixel umfasst, wobei mit den mehreren Pixeln Videoinformationen verknüpft sind.

6. Verfahren nach einem der Ansprüche 1 bis 5, wobei jedes Bild unter Verwendung einer Multi-view-Video-plus-Depth-(MVD-)Darstellung dargestellt wird.

7. Vorrichtung (5), die zum Texturieren eines Maschennetzes konfiguriert ist, wobei das Maschennetz mit einer Oberfläche (1) verknüpft ist, die eine in Übereinstimmung mit mehreren Standpunkten (11 bis 15) erfasste Szene darstellt, wobei mit jedem Standpunkt (11 bis 15) ein Bild (110 bis 150) der Szene verknüpft ist, wobei mindestens ein Maschennetzelement (10) des Maschennetzes von mindestens zwei ersten Bildern (110 bis 140) der mehreren Bilder (110 bis 150) mindestens teilweise sichtbar ist, wobei die Vorrichtung (5) einen Prozessor (51) umfasst, der konfiguriert ist zum:

a) Auswählen eines ersten Bilds unter den mindestens zwei ersten Bildern (110 bis 140);

b) Projizieren des Maschennetzelements (10) auf das ausgewählte erste Bild und Texturieren des Maschennetzelements (10) mit ersten Texturinformationen, die aus Pixeln des ausgewählten ersten Bilds erhalten werden, wobei die Pixel der Projektion des Maschennetzelements (10) auf das ausgewählte erste Bild entsprechen;

c) Vergleichen der ersten Texturinformationen des texturierten Maschennetzelements mit den Texturinformationen, die mit den Pixeln des jeden ersten Bilds verknüpft sind, das der Projektion des texturierten Maschennetzelements auf das jede erste Bild entspricht, für jedes erste Bild der mindestens zwei ersten Bilder (110 bis 140);
d) Bestimmen von Fehlerinformationen für die ersten Texturinformationen in Übereinstimmung mit einem Ergebnis des Vergleichs;

wobei die Vorrichtung **dadurch gekennzeichnet ist, dass** der Prozessor (51) ferner konfiguriert ist zum:

e) Auswählen eines ersten Bilds unter den mindestens zwei ersten Bildern (110 bis 140), das vom dem in dem Schritt a) ausgewählten ersten Bild verschieden ist, und Wiederholen der Operationen b) bis e), bis jedes erste Bild ausgewählt worden ist; und
f) Auswählen derjenigen ersten Texturinformationen, die die Fehlerinformationen minimieren, unter den mehreren ersten Texturinformationen.

8. Vorrichtung nach Anspruch 7, wobei die Fehlerinformationen, die mit ersten Texturinformationen verknüpft sind, einer Summe der Vergleichsergebnisse entsprechen.

9. Vorrichtung nach einem der Ansprüche 7 bis 8, wobei der Prozessor ferner konfiguriert ist zum:

- Projizieren des Maschennetzelements (10) in mindestens einem Teil der Bilder (110 bis 150) der Szene,
- Vergleichen von Tiefeninformationen, die mit dem projizierten Maschennetzelement verknüpft sind, und von Tiefeninformationen, die mit dem Bild verknüpft sind, für jedes Bild des mindestens einen Teils der Bilder,
- Bestimmen von Sichtbarkeitsinformationen, die mit dem Maschennetzelement (10) verknüpft sind, in Übereinstimmung mit dem Ergebnis des Vergleichs, für jedes Bild des mindestens einen Teils der Bilder (110 bis 150), wobei ein Maschennetzelement in Übereinstimmung mit den Sichtbarkeitsinformationen als in dem Bild mindestens teilweise sichtbar oder nicht sichtbar bezeichnet wird.

10. Vorrichtung nach Anspruch 9, wobei der Prozessor ferner zum Umwandeln der Koordinaten des Maschennetzelements (10) aus dem Welt-Raum in den Bild-Raum des Bilds konfiguriert ist.

11. Vorrichtung nach einem der Ansprüche 7 bis 10, wobei jedes Bild mehrere Pixel umfasst, wobei mit den mehreren Pixeln Videoinformationen verknüpft sind.

12. Vorrichtung nach einem der Ansprüche 7 bis 11, wobei jedes Bild unter Verwendung einer Multi-view-Video-plus-Depth-(MVD-)Darstellung dargestellt wird.

**Revendications**

1. Procédé mis en oeuvre sur un dispositif de calcul (5) pour la texturation d'un maillage, le maillage étant associé à une surface (1) représentative d'une scène capturée selon une pluralité de points de vue (11 à 15), une image (110 à 150) de la scène étant associée à chaque point de vue (11 à 15), dans lequel au moins un élément de maillage (10) dudit maillage est au moins partiellement visible depuis au moins deux premières images (110 à 140) de la pluralité d'images (110 à 150), comprenant :

a) la sélection d'une première image parmi lesdites au moins deux premières images (110 à 140) ;
b) la projection dudit élément de maillage (10) sur ladite première image sélectionnée et la texturation dudit élément de maillage (10) avec une première information de texture obtenue à partir de pixels de ladite première image sélectionnée, lesdits pixels correspondant à la projection dudit élément de maillage (10) sur ladite première image sélectionnée ;
c) pour chaque première image desdites au moins deux premières images (110 à 140), la comparaison de la première information de texture dudit élément de maillage texturé à l'information de texture associée aux pixels de ladite chaque première image qui correspond à la projection dudit élément de maillage texturé sur ladite chaque première image ;
d) l'identification d'une information d'erreur pour ladite première information de texture selon le résultat de ladite comparaison ;

le procédé étant **caractérisé en ce qu'**il comprend en outre :

e) la sélection d'une première image parmi lesdites aux moins deux premières images (110 à 140) différente de la première image sélectionnée à l'étape a) et répétition des étapes b) à e) jusqu'à ce que chaque première image soit sélectionnée ; et

f) sélection de la première information de texture limitant l'information d'erreur parmi la pluralité de premières informations de texture.

2. Procédé selon la revendication 1, dans lequel l'information d'erreur associée à une première information de texture correspond à la somme des résultats de la comparaison.

3. Procédé selon l'une des revendications 1 à 2, comprenant en outre :

- la projection dudit élément de maillage (10) dans au moins une partie desdites images de la scène (110 à 150),
- pour chaque image d'au moins une partie des images (110 à 150), la comparaison d'une information de profondeur associée à l'élément de maillage projeté et d'une information de profondeur associée à l'image,
- pour chaque image de ladite au moins une partie des images (110 à 150), l'identification d'une information de visibilité associée audit élément de maillage (10) selon le résultat de ladite comparaison, un élément de maillage étant étiqueté comme au moins partiellement visible ou non visible dans ladite image selon ladite information de visibilité.

4. Procédé selon la revendication 3, dans lequel ladite projection dudit élément de maillage (10) correspond à une conversion des coordonnées de l'élément de maillage (10) du repère global au repère d'image de l'image.

5. Procédé selon l'une des revendications 1 à 4, dans lequel chaque image comprend une pluralité de pixels, une information vidéo étant associée à la pluralité de pixels.

6. Procédé selon l'une des revendications 1 à 5, dans lequel chaque image est représentée à l'aide d'une représentation MVD (Multi-view Video plus Depth).

7. Dispositif (5) configuré pour texturer un maillage, le maillage étant associé à une surface (1) représentative d'une scène capturée selon une pluralité de points de vue (11 à 15), une image (110 à 150) de la scène étant associée à chaque point de vue (11 à 15), dans lequel au moins un élément de maillage (10) dudit maillage est au moins partiellement visible depuis au moins deux premières images (110 à 140) de la pluralité d'images (110 à 150), le dispositif (5) comprenant un processeur (51) configuré pour :

a) sélectionner une première image parmi lesdites au moins deux premières images (110 à 140) ;

b) projeter ledit élément de maillage (10) sur ladite première image sélectionnée et texturer ledit élément de maillage (10) avec une première information de texture obtenue à partir de pixels de ladite première image sélectionnée, lesdits pixels correspondant à la projection dudit élément de maillage (10) sur ladite première image sélectionnée ;

c) pour chaque première image desdites au moins deux premières images (110 à 140), comparer la première information de texture dudit élément de maillage texturé à l'information de texture associée aux pixels de ladite chaque première image qui correspond à la projection dudit élément de maillage texturé sur ladite chaque première image ;

d) identifier une information d'erreur pour ladite première information de texture selon le résultat de ladite comparaison ;

le dispositif étant **caractérisé en ce que** le processeur (51) est en outre configuré pour :

e) sélectionner une première image parmi lesdites aux moins deux premières images (110 à 140) différente de la première image sélectionnée à l'étape a) et répéter les étapes b) à e) jusqu'à ce que chaque première image soit sélectionnée ; et

f) sélectionner la première information de texture limitant l'information d'erreur parmi la pluralité de premières informations de texture.

8. Dispositif selon la revendication 7, dans lequel l'information d'erreur associée à une première information de texture correspond à la somme des résultats de la comparaison.

9. Dispositif selon l'une des revendications 7 à 8, dans lequel ledit processeur est en outre configuré pour :

- projeter ledit élément de maillage (10) dans au moins une partie desdites images (110 à 150) de la scène,
- comparer, pour chaque image de l'au moins une partie des images, une information de profondeur associée à l'élément de maillage projeté et une information de profondeur associée à l'image,
- identifier, pour chaque image de ladite au moins une partie desdites images (110 à 150), une information de visibilité associée audit élément de maillage (10) selon le résultat de la comparaison, un élément de maillage étant étiqueté comme au moins partiellement visible ou non visible dans ladite image selon ladite information de visibilité.

**10.** Dispositif selon la revendication 9, dans lequel ledit processeur est en outre configuré pour convertir les coordonnées de l'élément de maillage (10) du repère global au repère d'image de l'image.

**11.** Dispositif selon l'une des revendications 7 à 10, dans lequel chaque image comprend une pluralité de pixels, une information vidéo étant associée à la pluralité de pixels.

**12.** Dispositif selon l'une des revendications 7 à 11, dans lequel chaque image est représentée à l'aide d'une représentation MVD (Multi-view Video plus Depth).

EP 2 803 041 B1

**Fig 1**

17

**Fig 2**

Fig 3

Fig 4

**Fig 5**

60 — Init

Association of first textures
with mesh element

61

Projection of the first textures

62

Estimation of error information

63

Selection of a first texture

64

**Fig 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1161788

**Non-patent literature cited in the description**

- **LIYAMA et al.** *Super-Resolution Texture Mapping from Multiple View Images,* 23 August 2010
- **JUNG LEE et al.** Polygonal space carving with geometric anti-aliasing. *The Visual Computer,* June 2004
- **ECKERT et al.** *Shape refinement for reconstructing 3D-objects using an analysis-synthesis approach,* 01 July 2000
- **EHSAN AGANJ ; JEAN-PHILIPPE PONS ; FLORENT SÉGONNE ; RENAUD KERIVEN.** *Spatio-Temporal Shape from Silhouette using Four-Dimensional Delaunay Meshing*
- **KIRIAKOS N. KUTULAKOS ; STEVEN M. SEITZ.** A Theory of Shape by Space Carving. *International Journal of Computer Vision,* 2000, vol. 38 (3), 199-219
- **LORENSEN ; CLINE.** *SIGGRAPH proceedings,* 1987